**Europäisches Patentamt**

**European Patent Office**

**Office européen des brevets**

(11) Veröffentlichungsnummer: **0 483 472 A1**

# EUROPÄISCHE PATENTANMELDUNG

(21) Anmeldenummer: **91114063.0**

(51) Int. Cl.5: **G11B 27/028**

(22) Anmeldetag: **22.08.91**

(30) Priorität: **23.10.90 DE 4033654**

(43) Veröffentlichungstag der Anmeldung:
**06.05.92 Patentblatt 92/19**

(84) Benannte Vertragsstaaten:
**AT DE FR GB IT**

(71) Anmelder: **GRUNDIG E.M.V.
Elektro-Mechanische Versuchsanstalt Max
Grundig
Kurgartenstrasse 37
W-8510 Fürth(DE)**

(72) Erfinder: **Gwiosda, Horst, Grundig E.M.V.
holländ. Stiftung & Co.KG.
Kurgartenstrasse 37, W-8510 Fuerth(DE)**
Erfinder: **Schwab, Anton, Grundig E.M.V.
holländ. Stiftung & Co.KG.
Kurgartenstrasse 37, W-8510 Fuerth(DE)**

(54) **System zum elektronischen Schneiden von Videomagnetbändern.**

(57) Es wird ein System zum elektronischen Schneiden von Videomagnetbändern mit mindestens einem Wiedergabegerät (1), einer Anzeigeeinheit (2), einer Eingabetastatur (5), einem Schnittsteuergerät (3) und einem Aufzeichnungsgerät (4) beschrieben. Das Schnittsteuergerät weist einen Speicher (31) auf, in welchem Steuersignale für die gewünschte Reihenfolge der Wiedergabeszenen und ein Betriebsartkennsignal für jede Wiedergabeszene abgespeichert ist. Beim eigentlichen Schnittvorgang werden die Betriebsartkennsignale zum Aufzeichnungsgerät und/oder Wiedergabegerät übertragen und lösen dort eine der jeweils gewünschten Betriebsart entsprechende Signalverarbeitung aus.

EP 0 483 472 A1

Die Erfindung betrifft ein System zum elektronischen Schneiden von Videomagnetbändern mit den im Oberbegriff des Anspruchs 1 angegebenen Merkmalen.

Aus der professionellen Videotechnik ist es bereits bekannt, Videomagnetbänder elektronisch zu schneiden. Hierzu benötigt man mindestens ein Wiedergabegerät als Signalquelle, welche aufeinanderfolgende Wiedergabeszenen zur Verfügung stellt. Diese Wiedergabeszenen werden auf einem an das System angeschlossenen Bildschirm betrachtet. Dabei wird mittels einer Eingabetastatur die gewünschte Reihenfolge der Wiedergabeszenen festgelegt. Ferner wird mittels der Eingabetastatur festgelegt, in welcher Betriebsart jede der einzelnen Wiedergabeszenen auf einem Aufzeichnungsgerät aufgezeichnet werden soll. Mögliche Betriebsarten sind beispielsweise Normalbetrieb, Einzelbildbetrieb, Standbildbetrieb, Bildsuchlauf, Zeitlupe, Ein- und Ausblenden, Zoom, Bild-im Bild-Betrieb, Farbverfremdungen, Hervorheben von Konturen, Mosaik-Effekte, Jalousie-Effekte, Untertitelung, usw.. Zur Realisierung dieser Betriebsarten ist in ein Schnittsteuergerät, welches einen Speicher zur Abspeicherung von Steuersignalen aufweist, die der gewünschten Reihenfolge und den gewünschten Betriebsarten der Wiedergabeszenen entsprechen, ein Videoeffektgenerator integriert oder an dieses angeschlossen, in welchem eine der jeweils gewünschten Betriebsart entsprechende Verarbeitung der Videosignale erfolgt. Die verarbeiteten Signale werden schließlich dem Aufzeichnungsgerät zugeführt und dort aufgezeichnet.

Aus der Zeitschrift "IEEE Transactions on Consumer Electronics", Vol. 35, No. 3, August 1959, Seite 442 - 448, ist es bereits bekannt, einen Heimvideorecorder mit einem Halbbildspeicher auszurüsten und diesen bei Mischvorgängen dazu zu verwenden, die zu mischenden Signale aufeinander zu synchronisieren. Weiterhin wird beschrieben, wie mittels des bekannten Heimvideorecorders ein Suchlaufbetrieb, eine Rauschreduktion und Trickeffekte, wie beispielsweise Mosaik-Effekte, Zoom-Effekte, Spiegel-Effekte und Solarisation realisiert werden können.

Weiterhin ist es aus der Europäischen Patentanmeldung EP-A1-0 344 626 bekannt, unter Verwendung eines Bildspeichers eine Wiedergabe von gewünschten Szenen von einem Magnetband in beliebiger, vorgebbarer Reihenfolge und in unterschiedlichen, vorgebbaren Wiedergabebetriebsarten durchzuführen. Da dabei nur eine einzige Videosignalquelle zur Verfügung steht, wird während des zwischen den einzelnen Szenen notwendigen Umspulbetriebes das im Bildspeicher zuletzt abgespeicherte Signal auf dem Bildschirm dargestellt, um eine unterbrechungsfreie Wiedergabe zu erhalten.

Der Erfindung liegt die Aufgabe zugrunde, einen Weg aufzuzeigen, wie bei einem System zum elektronischen Schneiden von Videomagnetbändern mit den im Oberbegriff des Anspruchs 1 bzw. 3 angegebenen Merkmalen der zur Realisierung der genannten Betriebsarten nötige Schaltungsaufwand reduziert werden kann.

Diese Aufgabe wird bei einem System mit den im Oberbegriff des Anspruchs 1 bzw. 3 angegebenen Merkmalen durch die im kennzeichnenden Teil des Anspruchs 1 bzw. 3 angegebenen Merkmale gelöst.

Die Mittels des beanspruchten Systems erzielten Vorteile bestehen insbesondere darin, daß die im Aufzeichnungsgerät bzw. Wiedergabegerät ohnehin vorhandene Signalelektronik zur Realisierung der gewünschten Betriebsarten verwendet wird. Dies führt zu einer erheblichen Verbilligung des Schnittsteuergerätes, da die zur Erzielung der gewünschten Betriebsarten notwendige Signalverarbeitung nicht mehr im Schnittsteuergerät erfolgen muß.

Vorteilhafte Ausgestaltungen der Erfindung sind Gegenstand der Ansprüche 2 und 4.

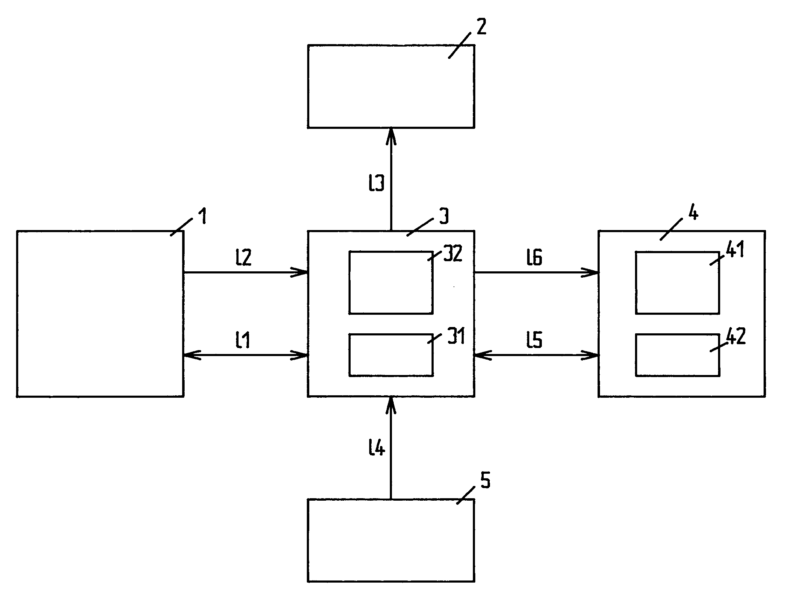

Weitere Vorteile der Erfindung ergeben sich aus der Erläuterung eines Ausführungsbeispiels für eine erste Ausführungsform der Erfindung anhand der Figur. Das dort dargestellte System weist ein Wiedergabegerät 1, eine Anzeigeeinheit 2, ein Schnittsteuergerät 3, ein Aufzeichnungsgerät 4 und eine Bedieneinheit 5 auf. Als Wiedergabegerät kann beispielsweise ein Kamerarecorder, ein Videorecorder oder ein Videoabspielgerät verwendet werden. Weiterhin ist es auch möglich, mehrere Wiedergabegeräte als Signalquelle zu verwenden. Als Aufzeichnungsgerät wird ein Videorecorder verwendet, welcher mit einer Signalelektronik ausgerüstet ist, die u.a. einen Bildspeicher aufweist. Mittels dieser Signalelektronik ist eine Wiedergabe von Szenen in verschiedenen Betriebsarten möglich, beispielsweise Normalbetrieb, Standbildbetrieb, Bildsuchlauf, Zeitlupe, Bild-im Bild-Betrieb, Mosaik-Effekte, Zoom-Effekte, Hervorheben von Konturen, Farbverfremdungen, Untertitelung, sowie Ein- und Ausblendeffekte. Die Ausgestaltung der Signalelektronik zur Durchführung der genannten Effekte bzw. Betriebsarten ist dem Fachmann bekannt und braucht zum Verständnis der Erfindung nicht näher erläutert werden.

Im folgenden wird ausgeführt, wie das gezeigte System arbeitet:

In das Wiedergabegerät 1 wird eine Magnetbandkassette eingelegt, auf deren Magnetband eine Vielzahl von Szenen aufgezeichnet ist. Durch Betätigung einer Wiedergabetaste auf der Bedieneinheit 5 wird einem im Schnittsteuergerät 3 angeordneten Mikrocomputer 32 über einen Steuerweg 14 ein Startbefehl übermittelt. Der Mikrocomputer 32 löst über den I²C-Bus I1 einen Start des Wiedergabegerätes 1 aus. Die den wiedergegebenen Szenen entsprechenden Videosignale werden über ein Euro-AV-Kabel I2 dem Schnittsteuergerät 3 zugeführt und von dort aus über die Leitung I3 an eine Anzeigeeinheit 2 weitergegeben und auf deren Bildschirm dargestellt.

Während dieses Wiedergabevorganges läuft ständig ein Bandzähler mit, so daß stets eine Information über die momentane Bandposition des Wiedergabegerätes vorliegt. Dieser Bandzähler ist beispielsweise mit dem Bandpositionssignal-Lesekopf (CTL-Kopf) des Wiedergabegerätes verbunden, welcher die in einer Steuerspur des Magnetbandes (CTL-Spur) aufgezeichneten Bandpositionssignale (CTL-Impulse) liest. Alternativ hierzu ist es auch möglich, daß die Information über die momentane Bandposition des Wiedergabegerätes durch Erfassung einer auf dem Magnetband aufgezeichneten Zeitinformation gewonnen wird, welche entweder in einer Längsspur am Bandrand oder in den Vertikalaustastlücken des Videosignals in den Schrägspuren des Magnetbandes aufgezeichnet ist.

Durch Betätigung einer Markiertaste auf der Bedieneinheit 5 werden die Anfänge und Enden gewünschter Szenen festgelegt. Bei jeder Betätigung der Markiertaste wird ein der momentanen Bandposition des Wiedergabegerätes entsprechendes Signal in einem Arbeitsspeicher 31 des Schnittsteuergerätes 3 abgelegt. Ferner wird mittels der Bedieneinheit 5 festgelegt, in welcher Reihenfolge die einzelnen Szenen wiedergegeben werden sollen. Dies erfolgt dadurch, daß den einzelnen Szenen Rangnummern zugeordnet werden und der unten beschriebene Aufzeichnungsvorgang auf ein in das Aufzeichnungsgerät 4 eingelegtes Magnetband nach aufsteigenden Rangnummern durchgeführt wird. Ein der mittels der Bedieneinheit 5 festgelegten Rangnummer der jeweiligen Szene entsprechendes Signal wird ebenfalls im Arbeitsspeicher 31 des Schnittsteuergerätes 3 abgelegt. Ferner wird mittels der Bedieneinheit 5 festgelegt, in welcher Betriebsart die ausgewählte Szene bei dem unten beschriebenen Aufzeichnungsvorgang auf das in das Aufzeichnungsgerät eingelegte Magnetband aufgezeichnet wird. Mögliche Betriebsarten sind beispielsweise Normalbetrieb, Standbildbetrieb, Bildsuchlauf, Zeitlupe, Bild-im Bild-Betrieb, Mosaik-Effekte, Zoom-Effekte, Hervorheben von Konturen, Farbverfremdungen, Untertitelung sowie Ein- und Ausblendeffekte. Ein der jeweils gewünschten Betriebsart entsprechendes Betriebsartkennsignal wird ebenfalls im Arbeitsspeicher 31 des Schnittsteuergerätes abgelegt. Dieses Betriebsartkennsignal besteht gemäß einer vorteilhaften Ausgestaltung der Erfindung lediglich aus einer laufenden Nummer. Beispielsweise entspricht die laufende Nummer 1 dem Normalbetrieb, die laufende Nummer 2 dem Standbildbetrieb, die laufende Nummer 3 dem Bildsuchlauf, die laufende Nummer 4 dem Zeitlupenbetrieb, die laufende Nummer 5 dem Bild-im Bild-Betrieb, die laufende Nummer 6 der Erzeugung von Mosaik-Effekten, die laufende Nummer 7 der Erzeugung von Zoom-Effekten, die laufende Nummer 8 der Hervorhebung von Konturen, die laufende Nummer 9 der Erzeugung von Farbverfremdungen, die laufende Nummer 10 einer Untertitelung, die laufende Nummer 11 der Einblendung eines von links nach rechts laufenden Vorhangs, die laufende Nummer 12 der Einblendung eines von rechts nach links laufenden Vorhangs, usw.

Die Zuordnung dieser laufenden Nummern zu den jeweiligen Betriebsarten wird vom Hersteller des Aufzeichnungsgerätes 4 getroffen und beispielsweise in Form eines Beipackzettels oder als Bestandteil der Bedienungsanleitung zusammen mit dem Aufzeichnungsgerät vertrieben.

Der Vorteil dieser Ausgestaltung besteht insbesondere darin, daß das Schnittsteuergerät universell einsetzbar ist, d.h. zusammen mit verschiedenen Aufzeichnungsgeräten verwendet werden kann, mittels deren einzelnen Signalelektroniken eine unterschiedliche Anzahl von Betriebsarten realisiert werden kann. Das Schnittsteuergerät benötigt keine Informationen darüber, welche Betriebsarten das jeweils angeschlossene Aufzeichnungsgerät durchführen kann.

Die Szenenauswahl ist beendet, wenn für jede ausgewählte Szene der Anfangsbandstand, der Endbandstand, die Rangnummer und ein Betriebsartkennsignal abgespeichert ist.

Der nach der Szenenauswahl erfolgende Aufzeichnungsvorgang läuft wie folgt ab: Durch Betätigen einer Starttaste auf der Bedieneinheit 5 wird dem im Schnittsteuergerät 3 angeordneten Mikrocomputer 32 über den Steuerweg I4 ein Startbefehl übermittelt. Der Mikrocomputer sucht im Arbeitsspeicher 31 anhand der abgespeicherten Rangnummern nach der ersten aufzuzeichnenden Szene und löst über den I²C-Bus I1 ein Umspulen des Wiedergabegerätes 1 zu der dem Anfangsbandstand der ersten aufzuzeichnenden Szene zugehörigen Bandstelle aus. Ist diese erreicht, dann schaltet der Mikrocomputer 32 des Schnittsteuergerätes 3 über den I²C-Bus I1 den Bandantriebsmotor des Wiedergabegerätes 1 auf Wiedergabe und über den I²C-Bus I5 den Bandantriebsmotor des Aufzeichnungsgerätes 4 auf Aufzeichnung. Weiterhin wird über den I²C-Bus I5 das aus dem Arbeitsspeicher 31 des Schnittsteuergerätes 3 gelesene, der aufzuzeichnenden Szene zugehörige Betriebsartkennsignal einem im Aufzeichnungsgerät 4 angeordneten Mikrocomputer 41 zugeführt. Der Mikrocomputer ist derart programmiert, daß er anhand des Betriebsartkennsignals, welches - wie oben beschrieben wurde - aus einer laufenden Nummer besteht, erkennt, welche Signalverarbeitung gewünscht wird. Zu dieser Signalverarbeitung steuert er die im Aufzeichnungsgerät ohnehin vorhandene Signalelektronik in Ansprache auf das Betriebsartkennsignal derart an, daß die vorliegende Szene in der gewünschten Betriebsart aufgezeichnet wird. Das zugehörige Videosignal wird dabei vom Wiedergabegerät 1 über ein Euro-AV-Kabel l2 zum Schnittsteuergerät 3 und von dort aus über ein Euro-AV-Kabel l6 zum Aufzeichnungsgerät 4 geführt. Ist der Endbandstand der ersten aufzuzeichnenden Szene erreicht, dann werden die Bandantriebsmotoren von Wiedergabe- und Aufzeichnungsgerät über den I²C-Bus l1 bzw. den I²C-Bus l5 gestoppt.

Danach sucht der Mikrocomputer 32 des Schnittsteuergerätes 3 im Arbeitsspeicher 31 anhand der abgespeicherten Rangnummern nach der zweiten aufzuzeichnenden Szene und löst über den I²C-Bus l1 ein Umspulen des Wiedergabegerätes 1 zu der dem Anfangsbandstand der zweiten aufzuzeichnenden Szene zugehörigen Bandstelle aus. Ist diese erreicht, dann steuert der Mikrocomputer 32 den Wiedergabevorgang des Wiedergabegerätes 1 und den Aufzeichnungsvorgang des Aufzeichnungsgerätes 4 derart, daß die zweite aufzuzeichnende Szene in der gewünschten Betriebsart aufgezeichnet wird, usw..

Beim beanspruchten System wird folglich beim Aufzeichnungsvorgang ein im Schnittsteuergerät abgespeichertes Betriebsartkennsignal über einen Steuerbus oder eine sonstige Steuersignalleitung dem Aufzeichnungsgerät zugeführt und dort zur Auslösung einer vorgegebenen Signalverarbeitung verwendet, die der gewünschten Betriebsart entspricht. Zur Durchführung der vorgegebenen Signalverarbeitung wird von der im Aufzeichnungsgerät ohnehin vorhandenen Signalelektronik Gebrauch gemacht. Folglich wird beim beanspruchten System kein in das Schnittsteuergerät eingebauter oder diesem beigestellter Videoeffektgenerator benötigt. Dies führt zu einer wesentlichen Verbilligung von Schnittsteuergeräten.

Bei einer zweiten Ausführungsform der Erfindung ist die Signalelektronik, die zur Realisierung der einzelnen Betriebsarten verwendet wird, im Wiedergabegerät 1 angeordnet. Bei dieser Ausführungsform werden beim Aufzeichnungsvorgang die jeweiligen Betriebsartkennsignale vom Speicher 31 des Schnittsteuergerätes über den I²C-Bus l1 einem im Wiedergabegerät 1 angeordneten Mikrocomputer zugeführt, von diesem ausgewertet und zur Auslösung der jeweils gewünschten Signalverarbeitung verwendet. Das im Wiedergabegerät 1 verarbeitete Signal wird über das Euro-AV-Kabel l2 zum Schnittsteuergerät und dort aus über das Euro-AV-Kabel l6 zum Aufzeichnungsgerät geführt und dort aufgezeichnet. Werden als Signalquelle mehrere Wiedergabegeräte verwendet, dann wird das Betriebsartsteuersignal bei dieser Ausführungsform demjenigen Wiedergabegerät zugeführt, mittels dessen die jeweilige Szene wiedergegeben wird, und aktiviert dessen Signalelektronik zur Durchführung der gewünschten Signalverarbeitung.

Bei einer dritten Ausführungsform der Erfindung wird zur Realisierung der einzelnen Betriebsarten sowohl die Signalelektronik des Wiedergabegerätes als auch die Signalelektronik des Aufzeichnungsgerätes verwendet. Bei dieser Ausführungsform wird im Speicher 31 des Schnittsteuergerätes für jede Szene zusätzlich zum Anfangsbandstand, dem Endbandstand, der Rangnummer und dem Betriebsartkennsignal ein Kennsignal dafür abgespeichert, in welchem Gerät die zur jeweiligen Szene gehörige Signalverarbeitung erfolgen soll. Diese Ausführungsform ist insbesondere dann vorteilhaft, wenn mittels der Signalelektronik des Wiedergabegerätes Betriebsarten realisiert werden können, die mittels der Signalelektronik des Aufzeichnungsgerätes nicht durchführbar sind, bzw. umgekehrt.

## Patentansprüche

1. System zum elektronischen Schneiden von Videomagnetbändern, mit
   - mindestens einem Wiedergabegerät als Signalquelle, welche aufeinanderfolgende Wiedergabeszenen zur Verfügung stellt,
   - einer Anzeigeeinheit zur Darstellung der Wiedergabeszenen,
   - einer Eingabetastatur zur Festlegung der gewünschten Reihenfolge der Wiedergabeszenen und der gewünschten Betriebsart für jede der Wiedergabeszenen,
   - einem Schnittsteuergerät mit einem Speicher zur Abspeicherung von Steuersignalen für die gewünschte Reihenfolge der Wiedergabeszenen und eines Betriebsartkennsignals für jede Wiedergabeszene,
   - einem Aufzeichnungsgerät zur Aufzeichnung der Wiedergabeszenen in der gewünschten Reihenfolge und der jeweils gewünschten Betriebsart,

   dadurch gekennzeichnet, daß die im Speicher (31) des Schnittsteuergerätes (3) abgespeicherten Betriebsartkennsignale an einem Ausgang des Schnittsteuergerätes (3) zur Verfügung stehen, von dort aus zum Aufzeichnungsgerät (4) übertragen werden und dort eine der jeweils gewünschten Betriebsart entsprechende Signalverarbeitung auslösen.

**2.** System nach Anspruch 1, **dadurch gekennzeichnet,** daß die im Schnittsteuergerät (3) abgespeicherten Betriebsartkennsignale Zahlenwerte sind und der im Aufzeichnungsgerät (4) angeordnete Mikrocomputer (41) in Ansprache auf die ihm zugeführten Zahlenwerte eine dem jeweiligen Zahlenwert entsprechende Signalverarbeitung auslöst.

**3.** System zum elektronischen Schneiden von Videomagnetbändern, mit
  - mindestens einem Wiedergabegerät als Signalquelle, welche aufeinanderfolgende Wiedergabeszenen zur Verfügung stellt,
  - einer Anzeigeeinheit zur Darstellung der Wiedergabeszenen,
  - einer Eingabetastatur zur Festlegung der gewünschten Reihenfolge der Wiedergabeszenen und der gewünschten Betriebsart für jede der Wiedergabeszenen,
  - einem Schnittsteuergerät mit einem Speicher zur Abspeicherung von Steuersignalen für die gewünschte Reihenfolge der Wiedergabeszenen und eines Betriebsartkennsignals für jede Wiedergabeszene, und
  - einem Aufzeichnungsgerät zur Aufzeichnung der Wiedergabeszenen in der gewünschten Reihenfolge und der jeweils gewünschten Betriebsart,

dadurch gekennzeichnet, daß die im Speicher (31) des Schnittsteuergerätes (3) abgespeicherten Betriebsartkennsignale an einem Ausgang des Schnittsteuergerätes (3) zur Verfügung stehen, von dort aus zu dem Wiedergabegerät (1) übertragen werden, mittels dessen die jeweilige Szene wiedergegeben wird, und dort eine der jeweils gewünschten Betriebsart entsprechende Signalverarbeitung auslösen.

**4.** System nach Anspruch 3, **dadurch gekennzeichnet,** daß die im Schnittsteuergerät (3) abgespeicherten Betriebsartkennsignale Zahlenwerte sind und der im Wiedergabegerät (1) angeordnete Mikrocomputer in Ansprache auf die ihm zugeführten Zahlenwerte eine dem jeweiligen Zahlenwert entsprechende Signalverarbeitung auslöst.

<table>
<tr><td colspan="2">Europäisches Patentamt</td><td>EUROPÄISCHER RECHERCHENBERICHT</td><td>Nummer der Anmeldung</td></tr>
</table>

EP 91 11 4063

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | EP-A-0 344 626 (GRUNDIG E.M.V.) <br> * Spalte 3, Zeile 43 - Spalte 4, Zeile 19 * <br> --- | 1,3 | G11B27/028 |
| Y | EP-A-0 228 878 (SONY CORPORATION) <br> * Seite 5, Zeile 32 - Seite 6, Zeile 29; Abbildung 1 * <br> --- | 1,3 | |
| A | US-A-4 774 600 (H.BAUMEISTER) <br> * das ganze Dokument * <br> ----- | 1-4 | |

**RECHERCHIERTE SACHGEBIETE (Int. Cl.5)**

G11B

Der vorliegende Recherchenbericht wurde für alle Patentansprüche erstellt

| Recherchenort | Abschlußdatum der Recherche | Prüfer |
|---|---|---|
| DEN HAAG | 27 FEBRUAR 1992 | KELPERIS K. |

EPO FORM 1503 03.82 (P0403)